# EUROPÄISCHE PATENTSCHRIFT

(11) **EP 1 064 540 B1**
(45) Veröffentlichungstag und Bekanntmachung des Hinweises auf die Patenterteilung: **10.12.2008**
(21) Anmeldenummer: 97941868.8
(22) Anmeldetag: 04.09.1997
(51) Int. Cl.: G01N 27/407

(54) **GASSENSOR ENTHALTEND EIN SCHUTZROHR& x9;**
GAS SENSOR COMPRISING A PROTECTING TUBE
CAPTEUR DE GAZ COMPRENANT UN TUBE DE PROTECTION

(30) Priorität: 25.11.1996 DE 19648685
(43) Veröffentlichungstag der Anmeldung: 03.01.2001
(73) Patentinhaber: ROBERT BOSCH GMBH, 70442 Stuttgart (DE)
(72) Erfinder: WEYL, Helmut, D-71701 Schwieberdingen (DE)
(86) Internationale Anmeldenummer: PCT/DE1997/001944
(87) Internationale Veröffentlichungsnummer: WO 1998/023949

(56) Entgegenhaltungen:
- EP-A- 0 158 256
- EP-A- 0 326 399
- DE-A- 4 220 726
- DE-U- 9 014 826
- US-A- 4 683 049

## Beschreibung

### Stand der Technik

Die Erfindung geht aus von einem Gassensor nach der Gattung des Anspruchs 1. Ein derartiger Gassensor ist aus der EP-A-158 256 bekannt. Das in der EP-A-158 256 zum Schutz des Sensorelements verwendete doppelwandige Schutzrohr hat eine äußere und eine innere Zylinderhülse mit jeweils in die Mantelfläche eingebrachten Gasöffnungen. Die Gasöffnungen der inneren Zylinderhülse sind axial versetzt zu den Gasöffnungen der äußeren Zylinderhülse angeordnet, so daß das Meßgas beim Eintritt in den Meßgasraum eine Umlenkung erfährt. Bei einer direkten Anströmung des Sensorelements mit Abgas können nämlich die im Abgas mitgeführten Partikel, wie beispielsweise Verunreinigungen oder Kondenswasser, den sensitiven Abschnitt des Sensorelements beschädigen.

DE 42 20 726 A1 offenbart eine Sauerstoffsonde mit einem doppelzylindrischen Schutzrohr, wobei jede der beiden Schutzhülsen gleichmässig verteilte Gasöffnungen aufweist.

### Vorteile der Erfindung

Der erfindungsgemäße Gassensor mit den kennzeichnenden Merkmalen des Hauptanspruchs hat den Vorteil, daß der sensitive Abschnitt des Sensorelements besser geschützt wird vor im Abgas mitgeführten Partikeln, wie Kondenswasser und Verunreinigungen. Das Abgas wird im Spalt zwischen den Zylinderhülsen auf die der Strömungsrichtung des Abgases abgewandten Seite geleitet, wodurch sich das im Abgas mitgeführte Kondenswasser im Spalt sammeln kann und somit vom thermoschockempfindlichen Sensorelement zurückgehalten wird. Bei fortschreitender Erwärmung des Abgases während der Warmlaufphase des Motors wird das Kondenswasser verdampft oder durch den an der vom Abgasstrom abgewandten Seite vorliegenden Unterdruck abgesaugt. Gleichzeitig wird eine ausreichende Durchströmung des Gasraumes mit Abgas gewährleistet.

Durch die in den Unteransprüchene aufgeführten Maßnahmen sind vorteilhafte Weiterbildungen und Verbesserungen des erfindungsgemäßen Gassensors möglich. Besonders vorteilhaft ist es, daß durch die Justiermittel die Montage des mehrwandigen Schutzrohres vereinfacht wird. Durch die als Montagehilfsmittel dienenden Justiermittel wird eine exakte Anordnung der Gasöffnungen bezüglich der Strömungsrichtung des Abgases ermöglicht. Zweckmäßig ist es, die Justiermittel als Rastelemente im Boden der Zylinderhülsen des Schutzrohres auszubilden. Dabei sind verschiedene Ausführungsformen der Rastelemente möglich.

### Zeichnung

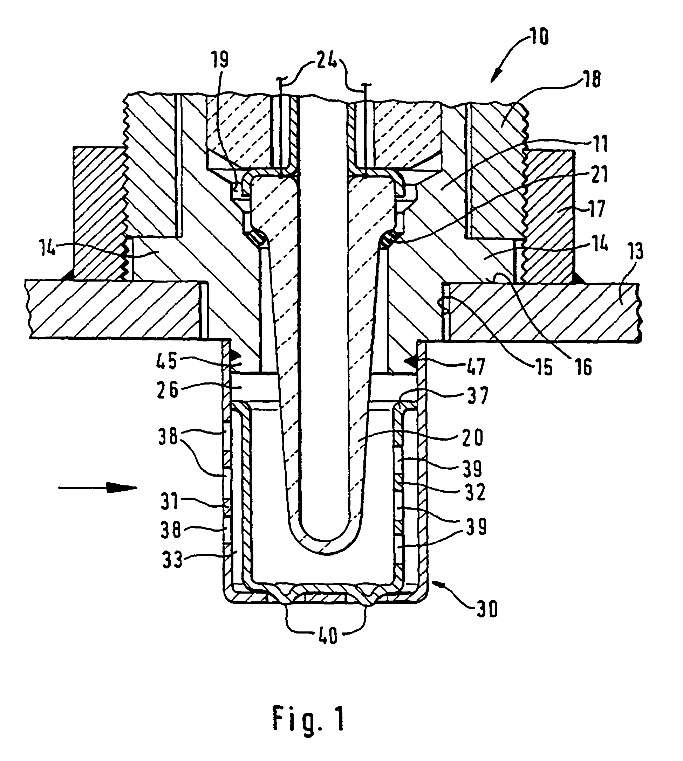

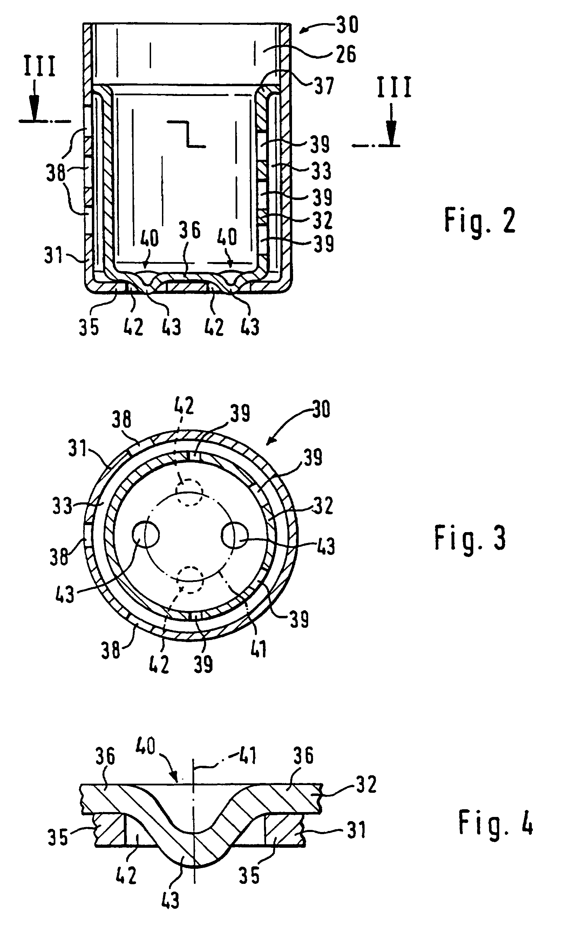

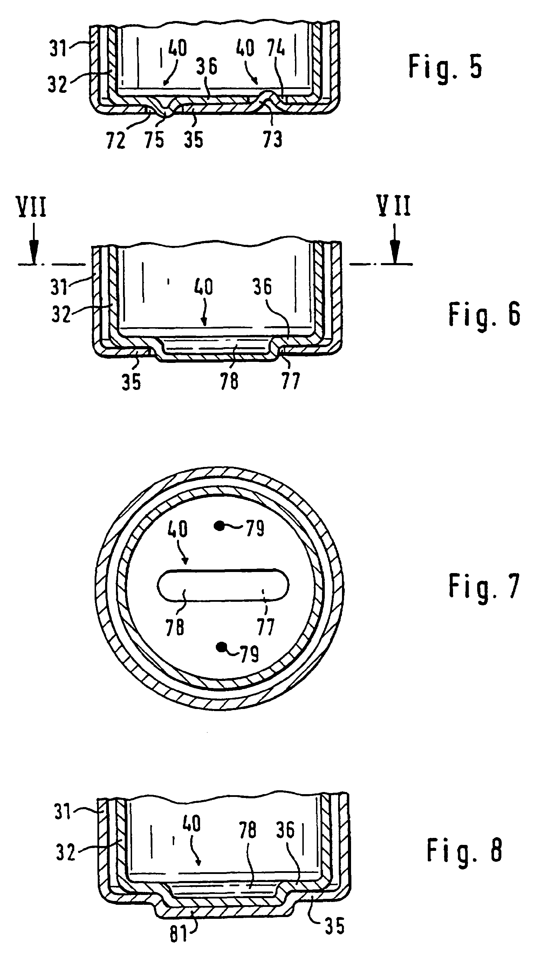

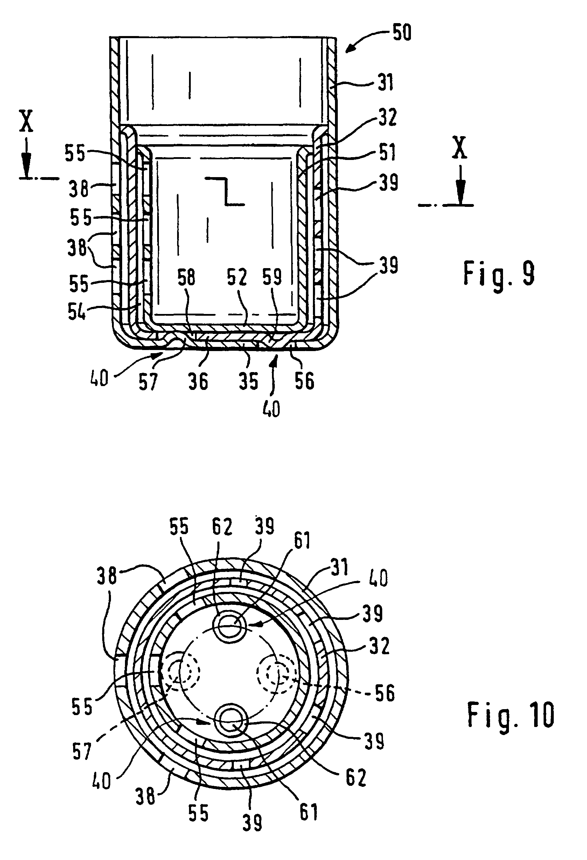

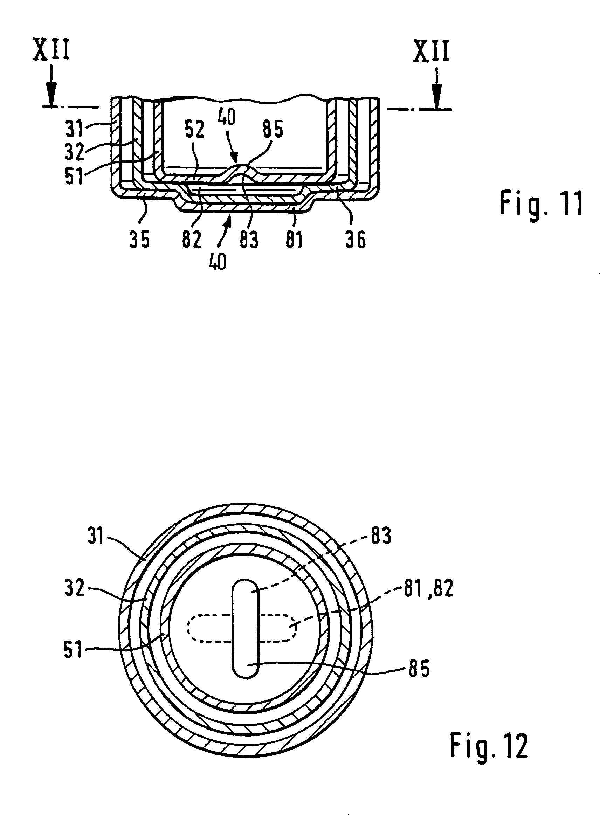

Ausführungsbeispiele der Erfindung sind in der Zeichnung dargestellt und in der nachfolgenden Beschreibung näher erläutert. Es zeigen Figur 1 einen meßgasseitigen Abschnitt eines Gassensors, Figur 2 einen Längsschnitt durch ein Schutzrohr mit zwei Zylinderhülsen und mit Justiermitteln zum radialen Justieren der Zylinderhülsen gemäß einem ersten Ausführungsbeispiel, Figur 3 einen Schnitt durch das Doppelschutzrohr nach der Linie III-III in Figur 2, Figur 4 eine vergrößerte Darstellung der Justiermittel in Figuren 2 und 3, Figur 5 eine zweite Ausführungsform der Justiermittel, Figur 6 eine dritte Ausführungsform der Justiermittel, Figur 7 einen Schnitt durch das Schutzrohr nach der Linie VII-VII in Figur 6, Figur 8 eine vierte Ausführungsform der Justiermittel, Figur 9 einen Längsschnitt durch ein Schutzrohr mit drei Zylinderhülsen und mit Justiermitteln zum radialen Justieren der Zylinderhülsen gemäß einem zweiten Ausführungsbeispiel, Figur 10 einen Schnitt durch das Schutzrohr nach der Linie X-X in Figur 9, Figur 11 eine weitere Ausführungsform der Justiermittel für das Schutzrohr gemäß Figur 9 und Figur 12 einen Schnitt durch das Schutzrohr nach der Linie XII-XII in Figur 11.

### Beschreibung der Ausführungsbeispiele

Der in Figur 1 dargestellte Gassensor zeigt einen meßgasseitigen Abschnitt 10 einer Lambda-Sonde mit einem metallischen Gehäuse 11, in dem ein Sensorelement 20 fixiert ist. Der meßgasseitige Abschnitt 10 der Lambda-Sonde ist in ein Abgasrohr 13 eingesetzt. Im Abgasrohr 13 strömt ein Meßgas, beispielsweise Abgas eines Verbrennungsmotors, wobei die Strömungsrichtung des Meßgases mit einem Pfeil angedeutet ist.

Im Abgasrohr 13 ist eine Öffnung 15 mit einer Ringfläche 16 vorgesehen, die von einem Gewindeflansch 17 umgeben ist. Der Gewindeflansch 17 ist am Abgasrohr 13 angeschweißt. Das Gehäuse 11 ist mit einem Ringflansch 14 ausgeführt, mit dem die Lambda-Sonde 10 auf der Ringfläche 16 aufliegt. Im Gewindeflansch 17 ist eine Hohlschraube 18 eingeschraubt, die mit ihrer Stirnfläche auf den Ringflansch 14 drückt und somit die Lambda-Sonde gasdicht im Abgasrohr 13 hält. Das Gehäuse 11 hat ferner eine abgestufte Längsbohrung 19, in die mittels eines Dichtrings 21 das Sensorelement 20 gasdicht eingesetzt ist.

Das Sensorelement 20 ist beispielsweise ein rohrförmiger Festelektrolytkörper (Fingersonde). Es ist aber genauso möglich, als Sensorelement 20 einen plättchenförmigen Festelektrolytkörper (Planarsonde) einzusetzen. Das Sensorelement 20 hat nicht näher dargestellte Elektrode, die über jeweilige Leiterbahnen zu am offenen Ende des Festelektrolytkörpers angeordneten Kontaktstellen geführt sind. An diesen Kontaktstellen wird das Sensorelement 20 mittels Anschlußkontakten 24 kontaktiert, die mit nicht dargestellten Anschlußkabeln verbunden sind. Die Anschlußkabel werden aus einer mit dem Gehäuse 11 gasdicht verschweißten Umkapselung herausgeführt und einem Steuergerät zur Auswertung der Sensorsignale zugeführt. Die dem Meßgas ausgesetzte Elektrode bildet einen sensitiven Abschnitt am Sensorelement 20 aus.

Das meßgasseitig aus der Längsbohrung 19 des Gehäuses 11 herausragende Sensorelement 20 ist mit Abstand von einem Schutzrohr 30 umgeben, so daß innerhalb des Schutzrohres 30 ein Meßgasraum 26 für das Sensorelement 20 gebildet wird. Das Schutzrohr 30 ist gemäß einem in den Figuren 1, 2, 3 und 5 bis 8 dargestellten ersten Ausführungsbeispiel als Doppelschutzrohr mit einer äußeren Zylinderhülse 31 und einer inneren Zylinderhülse 32 ausgeführt. Zwischen der äußeren Zylinderhülse 31 und der inneren Zylinderhülse 32 ist ein umlaufender Spalt 33 vorhanden. Die äußere Zylinderhülse 31 hat einen äußeren Boden 35. Die innere Zylinderhülse 32 hat einen inneren Boden 36, der über dem äußeren Boden 35 der äußeren Zylinderhülse 31 angeordnet ist. Die innere Zylinderhülse 32 hat ferner eine zur äußeren Zylinderhülse 31 weisende Umbiegung 37, die den Spalt 33 vom Meßgasraum 26 trennt.

Die äußere Zylinderhülse 31 hat in der Mantelfläche der einen Zylinderhälfte, die gegen die mit dem Pfeil dargestellten Strömungsrichtung des Abgases weist, mehrere, radial und axial verteilte äußere Gasöffnungen 38. Die innere Zylinderhülse 32 hat in der Mantelfläche der einen Zylinderhälfte ebenfalls mehrere, radial und axial verteilte innere Gasöffnungen 39, wobei die mit den Gasöffnungen 39 ausgeführte Zylinderhälfte der inneren Zylinderhülse 32 der Zylinderhälfte der äußeren Zylinderhülse 31 gegenüberliegt, die keine Gasöffnungen hat. Damit sind die Gasöffnungen 39 der inneren Zylinderhülse 32 bezogen auf die Strömungsrichtung des Abgases abgewandt von den Gasöffnungen 38 der äußeren Zylinderhülse 31 angeordnet. Diese Anordnung wird gewählt, damit das Abgas, das in die gegen die Strömungsrichtung des Meßgases weisenden äußeren Gasöffnungen 38 eintritt, zunächst in den Spalt 33 gelangt und dort auf die der Strömungsrichtung des Abgases abgewandte Seite gelangt, an der die inneren Gasöffnungen 39 der inneren Zylinderhülse 32 angeordnet sind. Durch die inneren Gasöffnungen 39 gelangt dann das Abgas in den Gasraum 26.

Damit die äußere Zylinderhülse 31 mit den Gasöffnungen 38 und die innere Zylinderhülse 32 mit den Gasöffnungen 39 die beschriebene radiale Position erhalten besitzen die Zylinderhülsen 31, 32 jeweils Justiermittel 40. Als Justiermittel 40 dienen gemäß Figur 3 und 4 beispielsweise auf einem Teilkreis 41 in den äußeren Boden 35 eingebrachte Aussparungen 42 und beispielsweise am inneren Boden 36 angeordnete Anformungen 43, wobei die Anformungen 43 in die Aussparungen 42 rastend eingreifen. Es ist aber genauso denkbar, die Anformungen 43 als einen am Boden 36 vorgesehenen Materialauftrag auszuführen.

Im Ausführungsbeispiel gemäß der Figuren 1, 2, und 3 sind auf dem Teilkreis 41 jeweils im 90° Abstand vier Aussparungen 42 in den Boden 35 der Zylinderhülse 31 eingebracht. Am inneren Boden 36 der Zylinderhülse 32 sind auf dem Teilkreis 41 und auf der Mittellinie, die die Zylinderhälfte mit den Gasöffnungen 39 von der Zylinderhälfte ohne Gasöffnungen trennt, zwei sich gegenüberliegende Anformungen 43 angeordnet.

Bei der Montage des Doppelschutzrohres gemäß der Figuren 1, 2 und 3 wird die innere Zylinderhülse 32 in die äußere Zylinderhülse 31 eingesetzt, so daß die Anformungen 43 in die entsprechenden Aussparungen 42 einrasten, wobei die beschriebene Anordnung der Gasöffnungen 38 und 39 zu gewährleisten ist. In dieser Position werden dann die Zylinderhülse 31 und 32 beispielsweise mittels eines im Boden angeordneten Schweißpunktes miteinander verbunden. Das so vormontierte Doppelschutzrohr 30 wird dann auf einen am Gehäuse 11 vorgesehenen Befestigungsflansch 45 geschoben und mittels einer umlaufenden Schweißnaht 47 verschweißt.

Gemäß einer in Figur 5 dargestellten zweiten Ausführungsform der Justiermittel 40 ist im äußeren Boden 35 der äußeren Schutzhülse auf dem Teilkreis 41 wechselseitig eine Aussparung 72 und eine Anformung 73 und am inneren Boden 36 der inneren Schutzhülse 32 eine weitere Aussparung 74 und eine weitere Anformung 75 vorgesehen, wobei die Anformung 73 der äußeren Schutzhülse 31 in die weitere Aussparung 74 der inneren Schutzhülse 32 und die weitere Anformung 75 der inneren Schutzhülse 32 in die Aussparung 72 der äußeren Schutzhülse 31 eingreifen.

Eine dritte Ausführungsform der Justiermittel geht aus den Figuren 6 und 7 hervor. Dort ist im äußeren Boden 35 der äußeren Schutzhülse 31 ein Langloch 77 vorgesehen, in das eine am inneren Boden 36 ausgebildete langlochförmige Sicke 78 eingreift. Mittels zweier Schweißpunkte 79, die parallel zum Verlauf des Langlochs 77 posioniert sind, werden die äußere Zylinderhülse 31 und die innere Zylinderhülse 32 miteinander verbunden.

Eine weitere Ausführungsform zur radialen Justierung der äußeren Zylinderhülse 31 und der inneren Zylinderhülse 32 zeigt Figur 8. Dort ist anstelle der in den Figuren 6 und 7 vorgesehenen Langlochs 77 eine weitere Sicke 81 in den äußeren Boden 35 der äußeren Zylinderhülse 31 eingeformt, in die die im inneren Boden 36 der inneren Schutzhülsen 32 angeordnete Sicke 78 eingreift.

Ein zweites Ausführungsbeispiel eines Schutzrohres geht aus den Figuren 9, 10, 11 und 12 hervor. Hier ist das Schutzrohr als Dreifach-Schutzrohr 50 ausgebildet, wobei zu den im ersten Ausführungsbeispiel beschriebenen beiden Zylinderhülsen 31 und 32 eine weiter innere Zylinderhülse 51 mit einem weiteren inneren Boden 52 in die innere Zylinderhülse 32 eingesetzt ist. Zwischen der inneren Zylinderhülse 32 und der weiteren inneren Zylinderhülse 51 ist ein weiterer umlaufender Spalt 54 ausgebildet. Die weitere Zylinderhülse 51 hat in der Mantelfläche der einen Zylinderhälfte mehrere, radial und axial verteilte dritte Gasöffnungen 55. Die Gasöffnungen 55 der weiteren Zylinderhülse 51 sind abgewandt von den Gasöffnungen 39 der inneren Zylinderhülse 32 angeordnet. Damit befinden sich die Gasöffnungen 55 der weiteren Zylinderhülse 51 in dem Bereich Zylinderhälfte der inneren Zylinderhülse 32, der keine Gasöffnungen aufweist. Dadurch wird das Abgas, das über die Gasöffnungen 38 und 39 in den weiteren Spalt 54 gelangt, vor dem Eintritt in den Gasraum 26 nochmals auf die gegenüberliegende Zylinderhälfte geleitet.

Als Justiermittel dienen bei dem zweiten Ausführungsbeispiel gemäß einer in Figur 9 und 10 dargestellten Ausführungsform ebenfalls in die Böden 35, 36, 52 der Zylinderhülsen 31, 32, 51 eingebrachte Aussparungen und Anformungen. Hierbei sind im äußeren Boden 35 auf dem Teilkreis 41 sich gegenüberliegend eine äußere Aussparung 56 und eine äußere Anformung 57 vorgesehen. Der innere Boden 36 hat auf dem Teilkreis 41 ebenfalls sich gegenüberliegend eine innere Aussparung 58 und eine innere Anformung 59 (Fig. 9), wobei in die Aussparung 58 der Zylinderhülse 32 die Anformung 57 der Zylinderhülse 31 und in die Aussparung 56 der Zylinderhülsen 31 die Anformung 59 der Zylinderhülsen 32 eingreifen.

Rechtwinklig zu der Anordnung der Aussparung 58 und der Anformung 59 sind auf der Mittellinie des Bodens 36 der Zylinderhülse 32 die die Zylinderhälfte mit Gasöffnungen und die Zylinderhälfte ohne Gasöffnungen teilt, beispielsweise zwei weitere sich gegenüberliegende Anformungen 61 ausgebildet. Im weiteren Boden 52 der weiteren Zylinderhülse 51 sind zwei sich gegenüberliegende dritte Aussparungen 62 vorhanden, die ebenfalls auf der die Zylinderhälften teilenden Mittellinie und auf dem Teilkreis 41 angeordnet sind. In die dritten Aussparungen 62 greifen die Anformungen 61 der Zylinderhülse 32 ein (Fig. 10). Durch diese radial zueinander ausgeführten Anformungen und Aussparungen ist eine Justierhilfe gegeben, die es erlaubt, daß die drei Zylinderhülse 31, 32, 51 radial definiert zueinander liegen. Dadurch wird gewährleistet, daß die Gasöffnungen 38, 39, 55 in der beschriebenen Weise zueinander angeordnet werden können. Die Befestigung der drei Zylinderhülse untereinander erfolgt wie beim ersten Ausführungsbeispiel beispielsweise mittels eines Schweißpunktes im Boden.

Eine weitere Ausführungsform der Justiermittel 40 zur radialen Justierung der drei Zylinderhülsen 31, 32 und 51 zeigen die Figuren 11 und 12, wobei das in Figur 8 dargestellte Prinzip von ineinandergreifenden Sicken Anwendung findet. Im äußeren Boden 35 der äußeren Zylinderhülse 31 ist gemäß Figur 8 die Sicke 81 vorgesehen. Die erste innere Zylinderhülse 32 hat in die Sicke 81 eingreifend eine erste Sicke 82 und rechtwinklig dazu eine beispielsweise entgegen zur Ausformungsrichtung der ersten Sicke 82 weisend eine zweite Sicke 83. In der zweiten inneren Zylinderhülse 51 ist eine weitere Sicke 85 eingebracht, die mit der zweiten Sicke 83 der ersten inneren Zylinderhülse 82 korrespondiert. Durch die rechtwinklig zueinander angeordneten Sicken 82 und 83 erhält die zweite innere Zylinderhülse 51 eine um 90° versetzte Anordnung zur ersten inneren Zylinderhülse 32. Die Befestigung des Schutzrohres 50 am Gehäuse 11 erfolgt wie bereits im ersten Ausführungsbeispiel beschrieben.

Es ist für alle Ausführungformen von Schutzrohren auch denkbar, in die Böden der jeweiligen Zylinderhülsen jeweils zumindest ein Loch einzubringen, so daß das Schutzrohr im Boden mindestens eine zusätzliche Gasöffnung erhält.

Darüberhinaus ist es möglich, mehr als drei Zylinderhülsen koaxial anzuordnen, so daß das in den Gasraum 26 einzuleitende Meßgas eine weitere oder mehrere weitere Umlenkungen erfährt.

## Patentansprüche

1. Gassensor mit einem Sensorelement, welches in einem Gehäuse fixiert ist, mit einem Schutzrohr mit einer äußeren Zylinderhülse und mindestens einer inneren Zylinderhülse, die jeweils beabstandet voneinander angeordnet sind und jeweils Gasöffnungen zum Ein- und/oder Austritt eines Messgases in einen Messgasraum aufweisen, wobei das Sensorelement mit einem messgasseitigen Abschnitt in den Messgasraum hineinragt, **dadurch gekennzeichnet, dass** die Gasöffnungen (38,39,55) der einen Zylinderhülse (31,32,51) in der Mantelfläche einer der Zylinderhälften und die Gasöffnungen (38,39,55) der weiteren Zylinderhülse (31,32,51) in der Mantelfläche der Zylinderhälfte angeordnet sind, die von der mit den Gasöffnungen versehenen Zylinderhälfte der benachbarten Zylinderhülse abgewandt ist.

2. Gassensor nach Anspruch 1, **dadurch gekennzeichnet, daß** die Gasöffnungen (38) der äußeren Zylinderhülse (31) in der Mantelfläche einer der Zylinderhälften und die Gasöffnungen (39, 55) der weiteren Zylinderhülse (32, 51) in der Mantelfläche der Zylinderhälfte angeordnet sind, die von der mit den Gasöffnungen versehenen Zylinderhälfte der benachbarten Zylinderhülse abgewandt ist.

3. Gassensor nach Anspruch 1 oder 2, **dadurch gekennzeichnet, daß** die Gasöffnungen der äußeren Zylinderhülse (31) an der Mantelfläche der Zylinderhälfte angeordnet sind, die gegen die Strömungsrichtung des Meßgases weist.

4. Gassensor nach Anspruch 1, **dadurch gekennzeichnet, daß** die Zylinderhülsen (31, 32, 51) jeweils einen Boden (35, 36, 52) aufweisen, der mit Justiermitteln (40) versehen ist, die eine definierte radiale Position der jeweils in den Zylinderhülsen (31, 32, 51) vorgesehenen Gasöffnungen (38, 39, 55) zueinander erlauben.

5. Gassensor nach Anspruch 4, **dadurch gekennzeichnet, daß** die Justiermittel (40) auf einem Teilkreis (41) angeordnete Aussparungen und/oder Anformungen sind und daß die Anformungen des einen Bodens in die Aussparungen oder Anformungen des benachbarten Bodens eingreifen.

6. Gassensor nach Anspruch 5, **dadurch gekennzeichnet, daß** die Aussparungen und/oder die Anformungen kreisförmig ausgebildet sind.

7. Gassensor nach Anspruch 5, **dadurch gekennzeichnet, daß** die Aussparungen und/oder die Anformungen langlochförmig ausgebildet sind.

## Claims

1. Gas sensor having a sensor element, which is fixed in a housing, and having a protecting tube with an outer cylindrical sleeve and at least one inner cylindrical sleeve which are each at a distance from one another and each have gas openings for the entry and/or exit of a measurement gas into and/or from a measurement gas space, a section of the sensor element on the measurement gas side projecting into the measurement gas space, **characterized in that** the gas openings (38, 39, 55) of one cylindrical sleeve (31, 32, 51) are arranged on the lateral surface of one of the cylinder halves, and the gas openings (38, 39, 55) of the further cylindrical sleeve (31, 32, 51) are arranged on the lateral surface of the cylinder half which is remote from that cylinder half of the adjacent cylindrical sleeve which is provided with the gas openings.

2. Gas sensor according to Claim 1, **characterized in that** the gas openings (38) of the outer cylindrical sleeve (31) are arranged on the lateral surface of one of the cylinder halves, and the gas openings (39, 55) of the further cylindrical sleeve (32, 51) are arranged on the lateral surface of the cylinder half which is remote from that cylinder half of the adjacent cylindrical sleeve which is provided with the gas openings.

3. Gas sensor according to Claim 1 or 2, **characterized in that** the gas openings of the outer cylindrical sleeve (31) are arranged on the lateral surface of the cylinder half which points towards the direction of flow of the measurement gas.

4. Gas sensor according to Claim 1, **characterized in that** the cylindrical sleeves (31, 32, 51) each have a base (35, 36, 52) which is provided with adjustment means (40) which allow a defined radial position of the gas openings (38, 39, 55), which are respectively provided in the cylindrical sleeves (31, 32, 51), with respect to one another.

5. Gas sensor according to Claim 4, **characterized in that** the adjustment means (40) are cutouts and/or integrally formed sections which are arranged on a pitch circle (41), and **in that** the integrally formed sections of one base engage in the cutouts or integrally formed sections of the adjacent base.

6. Gas sensor according to Claim 5, **characterized in that** the cutouts and/or the integrally formed sections are circular.

7. Gas sensor according to Claim 5, **characterized in that** the cutouts and/or the integrally formed sections are in the form of slots.

## Revendications

1. Capteur de base comportant un élément de capteur fixé dans un boîtier, un tube protecteur ayant un manchon cylindrique extérieur et au moins un manchon cylindrique intérieur, installés écartés l'un par rapport à l'autre ainsi que des orifices de passage de gaz pour l'entrée et/ou la sortie d'un gaz de mesure dans un volume de mesure de gaz, l'élément de capteur pénétrant avec un segment côté gaz de mesure dans le volume de mesure de gaz,
**caractérisé en ce que**
les orifices de passage de gaz (38, 39, 55) d'un manchon cylindrique (31, 32, 51) sont prévus dans la surface enveloppe de l'une des moitiés de cylindre, et
les orifices de passage de gaz (38, 39, 55) de l'autre manchon cylindrique (31, 32, 51) sont prévus dans la surface enveloppe de la moitié de cylindre écartée de la moitié de cylindre munie des orifices de passage de gaz de l'autre manchon de cylindre.

2. Capteur de gaz selon la revendication 1,
**caractérisé en ce que**
les orifices de passage de gaz (38) du manchon de cylindre extérieur (31) sont prévus dans la surface enveloppe de l'une des moitiés de cylindre et les orifices de passage de gaz (39, 55) de l'autre manchon de cylindre (32, 51) sont prévus dans la surface enveloppe de la moitié de cylindre non tournée vers la moitié de cylindre de l'autre manchon de cylindre voisin munie des orifices de passage de gaz.

3. Capteur de gaz selon la revendication 1 ou 2,
**caractérisé en ce que**
les orifices de passage de gaz du manchon de cylindre extérieur (31) sont prévus sur la surface enveloppe de la moitié de cylindre tournée contre la direction de passage du gaz à mesurer.

4. Capteur de gaz selon la revendication 1,
**caractérisé en ce que**
les manchons de cylindre (31, 32, 51) ont chacun un fond (35, 36, 52) muni de moyens d'ajustage (40) permettant d'avoir une position radiale définie pour les orifices de passage de gaz (38, 39, 55) prévus dans les manchons de cylindre (31, 32, 51) respectifs.

5. Capteur de gaz selon la revendication 4,
**caractérisé en ce que**
les moyens d'ajustage (41) sont des dégagements et/ou des déformations réparties sur un cercle primitif (41), et
les déformations d'un fond pénètrent dans les cavités ou déformations du fond voisin.

6. Capteur de gaz selon la revendication 5,
**caractérisé en ce que**
les dégagements et/ou les déformations sont de forme circulaire.

7. Capteur de gaz selon la revendication 5,
**caractérisé en ce que**
les dégagements et/ou les déformations sont en forme de trous oblongs.
